# EUROPÄISCHE PATENTSCHRIFT

(11) **EP 1 497 574 B1**
(45) Veröffentlichungstag und Bekanntmachung des Hinweises auf die Patenterteilung: **19.04.2006**
(21) Anmeldenummer: 03727190.5
(22) Anmeldetag: 10.04.2003
(51) Int. Cl.: F16H 61/00

(54) **HYDRAULIKSYSTEM, AUTOMATIKGETRIEBE**
HYDRAULIC SYSTEM AND AUTOMATIC GEARBOX
SYSTEME HYDRAULIQUE, BOITE DE VITESSES AUTOMATIQUE

(30) Priorität: 10.04.2002 DE 10215715; 02.11.2002 DE 10251073; 10.12.2002 DE 10257575
(43) Veröffentlichungstag der Anmeldung: 19.01.2005
(73) Patentinhaber: LuK Lamellen und Kupplungsbau Beteiligungs KG, 77815 Bühl (DE)
(72) Erfinder: MÜLLER, Eric, 67657 Kaiserslauten (DE); STEHR, Reinhard, 77815 Bühl (DE); HOMM, Manfred, 77815 Bühl-Neusatz (DE); REUSCHEL, Michael, 77833 Ottersweier (DE); INDLEKOFER, Norbert, 77815 Bühl (DE); ENGLISCH, Andreas, 77886 Lauf (DE); VORNEHM, Martin, 77815 Bühl (DE); LAUINGER, Christian, 76532 Baden-Baden (DE)
(86) Internationale Anmeldenummer: PCT/DE2003/001194
(87) Internationale Veröffentlichungsnummer: WO 2003/087627

(56) Entgegenhaltungen:
- EP-A- 0 502 263
- EP-A- 0 764 799
- EP-A- 0 826 910
- WO-A-01/53724
- DE-A- 3 727 633
- DE-A- 4 331 266

## Beschreibung

Die Erfindung betrifft ein Hydrauliksystem mit einer mehrflutigen, insbesondere zweiflutigen hydraulischen Druckversorgungseinheit, wie einer Pumpe, durch die einem Verbraucher ein Volumenstrom zugeführt wird. Die Erfindung betrifft auch ein Automatikgetriebe für Kraftfahrzeuge.

In modemen Kraftfahrzeugen werden zur Verbesserung von Sicherheit und Komfort Hydrauliksysteme eingesetzt, in denen mindestens eine Druckversorgungseinheit mindestens einen Verbraucher definiert mit Druck beaufschlagt. Die bekannten Hydrautiksysteme weisen zwar eine hohe Leistungsdichte, ein geringes Leistungsgewicht und eine hohe Dynamik auf, benötigen aber, im Vergleich mit geregelten elektrischen Antrieben, mehr Energie, was zu einem höheren Kraftstoffverbrauch führt. Zur Druckversorgung von zum Beispiel Automatikgetrieben werden bisher meist einftutige Pumpen verwendet. Dabei bedeutet einflutig, dass die Pumpe eine Pumpenflut fördert. Demgegenüber können mehrflutige Pumpen mehrere, von einander unabhängige Pumpenfluten fördem. Die Pumpentluten sind also parallel geschaltet.

Aufgabe der Erfindung ist es, die Verluste in bekannten Hydrauliksystemen, wie beispielsweise in der DE 3727633 A1, die die merkmale des Oberbegtiffs des Anspruchs 1 offenbart, gezeigt, zu reduzieren. Dabei soll die in dem Hydrauliksystem eingesetzte hydraulische Druckversorgungseinheit über eine große Bandbreite der hydraulischen Anforderungen hinweg den Ansprüchen in der Automobilindustrie entsprechen.

Die Aufgabe ist bei einem Hydrauliksystem mit einer mehrflutigen, insbesondere zweiflutigen hydraulischen Druckversorgungseinheit, wie einer Pumpe, durch die einem Verbraucher ein Volumenstrom zugeführt, dadurch gelöst, dass eine Ventileinrichtung zum Umschalten zwischen den einzelnen Pumpenfluten und/oder zum Zusammenschalten der einzelnen Pumpenfluten vorgesehen ist und die einzelnen Pumpenfluten über ein Rückschlagventil zusammengeführt beziehungsweise getrennt sind, wobei die mindestens eine Pumpenflut, die durch das Rückschlagventil von der mindestens einen anderen Pumpenflut getrennt ist, über die Ventileinrichtung abführbar ist, die die Ventileinrichtung eine durch eine Federeinrichtung vorgespannte Fläche aufweist, die mit dem Staudruck einer von dem Verbraucher zur Eingangsseite der hydraulischen Druckversorgungseinheit führenden Rückführung beaufschlagt ist.

Die Ventileinrichtung ermöglicht es, die einzelnen Pumpenfluten gezielt anzusteuern. Je nach Bedarf ist es möglich, mit nur einer einzigen Ventileinrichtung gezielt eine oder mehrere Pumpenfluten anzusteuern.

Das Rückschlagventil ermöglicht es, mindestens eine der Pumpenfluten gezielt abzuführen, so dass gegebenenfalls nur mindestens eine der Pumpenfluten zum Verbraucher gefördert wird.

In Abhängigkeit von der Stellung der Ventileinrichtung werden nur eine Pumpenflut oder mehrere Pumpenfluten dem Verbraucher zugeführt. Das Rückschlagventil verhindert, dass alle Pumpenfluten abgeführt werden.

Die Verwendung des Rückführstaudrucks zur Ansteuerung der Ventileinrichtung gewährleistet, dass die Ventileinrichtung von einer einflutigen auf eine mindestens zweifiutige Förderung der hydraulischen Druckversorgungseinheit umschaltet, wenn der Rückführstaudruck einen vorgegebenen Minimalwert unterschreitet. Wenn der Rückführstaudruck einen vorgegebenen Maximalwert überschreitet, schaltet die Ventileinrichtung von einer mindestens zweiflutigen auf eine mindestens einflutige Förderung der hydraulischen Druckversorgungseinheit um.

Ein weiteres bevorzugtes Ausführungsbeispiel des Hydrauliksystems ist dadurch gekennzeichnet, dass zwischen der Ventileinrichtung und der Eingangsseite der hydraulischen Druckversorgungseinheit ein hydraulischer Widerstand angeordnet ist. Der hydraulische Widerstand dient dazu, den zur Ansteuerung der Ventileinrichtung verwendeten Rückstaudruck zu erzeugen.

Ein weiteres bevorzugtes Ausführungsbeispiel des Hydrauliksystems ist dadurch gekennzeichnet, dass die Ventileinrichtung ein 2/2-Wegeventil umfasst, das in der einen Stellung eine zwischen der Ausgangsseite einer Pumpenflut und der Eingangsseite der hydraulischen Druckversorgungseinheit vorgesehene Verbindung freigibt, die in der anderen Stellung des 2/2-Wegeventils unterbrochen ist. Das 2/2-Wegeventil ermöglicht es, die beiden Pumpenfluten bedarfsabhängig einzeln oder zusammen dem Verbraucher zuzuführen.

Ein weiteres bevorzugtes Ausführungsbeispiel des Hydrauliksystems ist dadurch gekennzeichnet, dass die Ventileinrichtung drei Schaltstufen aufweist, wobei in der ersten Schaltstufe ein Kühlkreislauf nicht versorgt wird und nur eine Pumpenflut von der hydraulischen Druckversorgungseinheit zum Verbraucher gefördert wird, wobei in der zweiten Schaltstufe der Kühlkreislauf nicht versorgt wird und mindestens zwei Pumpenfluten von der hydraulischen Druckversorgungseinheit zum Verbraucher gefördert werden, und wobei in der dritten Schaltstufe der Kühlkreislauf versorgt wird und mindestens zwei Pumpenfluten von der hydraulischen Druckversorgungseinheit zum Verbraucher gefördert werden. Die drei Schaltstufen ermöglichen es, dass die bedarfabhängig ansteuerbare Ventileinrichtung auch zum Ein- und Ausschalten der Kühlung zum Beispiel einer Kupplung verwendet werden kann.

Ein weiteres bevorzugtes Ausführungsbeispiel des Hydrauliksystems ist dadurch gekennzeichnet, dass die Ventileinrichtung eine weitere Schaltstufe aufweist, in welcher der Kühlkreislauf nicht versorgt und ein Sicherheitsventil betätigt wird. Das Sicherheitsventil kann zum Beispiel dazu dienen, eine Überhitzung des geförderten Mediums zu verhindern, oder stellt einen redundanten Öffnungsmechanismus für eine Kupplung dar.

Ein weiteres bevorzugtes Ausführungsbeispiel des Hydrauliksystems ist dadurch gekennzeichnet, dass die Ventileinrichtung, insbesondere als 2/2-Wegeventil, so ausgelegt ist, dass nur eine Pumpenflut von der hydraulischen Druckversorgungseinheit zu dem Verbraucher gefördert wird, solange ein erster Druck, insbesondere der Verstelldruck eines Automatikgetriebes, kleiner oder gleich der Summe aus einem zweiten Druck, insbesondere dem Anpressdruck des Automatikgetriebes, und einer Federkraft ist, und dass mindestens zwei Pumpenfluten von der hydraulischen Druckversorgungseinheit zu dem Verbraucher gefördert werden, wenn der erste Druck, insbesondere der Verstelldruck eines Automatikgetriebes, größer als die Summe aus dem zweiten Druck, insbesondere dem Anpressdruck eines Automatikgetriebes, und der Federkraft ist. Dadurch ist gewährleistet, dass die Zuschaltung mindestens einer weiteren Pumpenflut bedarfsabhängig erfolgt.

Ein weiteres bevorzugtes Ausführungsbeispiel des Hydrauliksystems ist dadurch gekennzeichnet, dass die Ventileinrichtung einen Stößel umfasst, dessen eine Stirnseite mit dem ersten Druck und dessen andere Stirnseite mit dem zweiten Druck und der Federkraft beaufschlagt ist. Der Stößel verschiebt sich in Abhängigkeit der auf ihn wirkenden Drücke und gibt so einen Strömungsweg für eine oder mehrere Pumpenfluten frei.
Ein weiteres bevorzugtes Ausführungsbeispiel des Hydrauliksystems ist dadurch gekennzeichnet, dass die Ventileinrichtung neben der beschriebenen Zu- oder Abschaltung einer Pumpenflut (= erste Ventilfunktion) noch weitere Ventilfunktionen wahrnimmt, indem der Ventilstößel noch an weiteren Steueranten Öffnungen freigibt oder verschließt. Diese weiteren Funktionen des Ventils können zum Beispiel eine Druckbeaufschlagung einer hydraulischen Kupplung sein, oder die Druckbeaufschlagung an Kegelscheiben eines stufenlosen Getriebes. Die Kopplung der ersten Ventilfunktion mit einer weiteren Ventilfunktion stellt einen Kostenvorteil dar, weil statt zwei Schiebern und Bohrungen nur einer hergestellt bzw. bearbeitet werden muss. Die Kopplung der ersten Ventilfunktion mit einer weiteren Ventilfunktion stellt ebenfalls einen Funktionsvorteil dar, wenn durch die weitere Ventilfunktion ein Volumenstrombedarf gesteuert wird, dessen Deckung im selben Ventil durch Zuschalten einer Pumpenflut erfolgt. Die Kopplung der ersten Ventilfunktion mit einer weiteren Ventilfunktion stellt ebenfalls einen Funktionsvorteil dar, wenn diese Ventilfunktionen bei unterschiedlichen Verschiebungen des Stößels, d.h. zum Teil unabhängig erfolgen können. Zum Beispiel kann die weitere Ventilfunktion die Druckbeaufschlagung einer Kupplung für den 2.Gang darstellen, und der Stößel erlaubt nun, bei nicht betätigter Kupplung durch ein Weiterschieben des Stößels eine weitere Pumpenflut zuzuschalten. Dieses Steuern und insbesondere Weiterschieben des Stößels erfolgt in bekannter Weise z.B. durch Anlegen eines kleinen elektronisch gesteuerten Druckes auf eine Stirnfläche des Stößels.

Ein weiteres bevorzugtes Ausführungsbeispiel des Hydrauliksystems ist dadurch gekennzeichnet, dass die Ventileinrichtung mindestens zwei Ventile umfasst, deren Umschalten jeweils bewirkt, dass mindestens eine der Pumpenfluten zum Verbraucher gefördert wird.

Die beiden Ventile nehmen jeweils noch weitere Funktionen wie oben beschrieben wahr, beispielsweise die Druckbeaufschlagung jeweils einer Kupplung.

Ein weiteres bevorzugtes Ausführungsbeispiel des Hydrauliksystems ist dadurch gekennzeichnet, dass die beiden Ventile in Reihe geschaltet sind. Die Umschaltung von einem der beiden Ventile führt dazu, dass mindestens eine der Pumpenfluten zum Verbraucher gefördert wird. Die mindestens eine andere Pumpenflut wird zur Eingangsseite der hydraulischen Druckversorgungseinheit zurückgeführt.

Ein weiteres bevorzugtes Ausführungsbeispiel des Hydrauliksystems ist dadurch gekennzeichnet, dass zwischen der Ausgangsseite der hydraulischen Druckversorgungseinheit und dem Verbraucher ein Volumenstromregelventil angeordnet ist. Das Volumenstromregelventil dient dazu, den Volumenstrom zu dem Verbraucher zu regeln. Der überschüssige Volumenstrom wird zur Eingangsseite der hydraulischen Druckversorgungseinheit zurückgeführt.

Ein weiteres bevorzugtes Ausführungsbeispiel des Hydrauliksystems ist dadurch gekennzeichnet, dass das Zu-/Wegschalten einzelner Pumpenstufen bedarfsabhängig erfolgt. Es können zum Beispiel feste Drehzahlschwellen definiert werden, an welchen die Umschaltung erfolgt. Dabei ist darauf zu achten, dass bei einem Wegschalten einer Pumpenflut stets der erforderliche Bedarf noch gedeckt wird.
Ein weiteres bevorzugtes Ausführungsbeispiel des Hydrauliksystems ist dadurch gekennzeichnet, dass das Verhältnis zwischen den einzelnen Pumpenfluten asymmetrisch ist. Dadurch ist es möglich, mit einer hydraulischen Druckversorgungseinheit mindestens drei unterschiedliche Volumenströme zu fördern.

Ein weiteres bevorzugtes Ausführungsbeispiel des Hydrauliksystems ist dadurch gekennzeichnet, dass eine erste Pumpenflut etwa ein Drittel und eine zweite Pumpenflut etwa zwei Drittel des gesamten Förderstroms der hydraulischen Druckversorgungseinheit umfasst. Mit einer entsprechenden Ansteuerlogik können bedarfsabhängig beide Pumpenfluten zusammen 100 % oder nur eine Pumpenflut 33 beziehungsweise 66 % des gesamten Förderstroms der hydraulischen Druckversorgungseinheit liefern.

Ein weiteres bevorzugtes Ausführungsbeispiel des Hydrauliksystems ist dadurch gekennzeichnet, dass die hydraulische Druckversorgungseinheit eine Flügelzellenpumpe oder eine Innenzahnradpumpe umfasst.

Ein weiteres bevorzugtes Ausführungsbeispiel des Hydrauliksystems ist dadurch gekennzeichnet, dass zwischen der Ventileinrichtung und der Eingangsseite der hydraulischen Druckversorgungseinheit ein hydraulischer Widerstand angeordnet ist, der eine Injektorpumpe umfasst, welche in die Flügelzellenpumpe integriert ist. Die tnjektorpumpe wird verwendet, um eine ordentliche Befüllung der vorzugsweise mechanisch angetriebenen Pumpe bei höheren Drehzahlen sicherzustellen.

Die oben angegebene Aufgabe ist bei einem Automatikgetriebe für Kraftfahrzeuge durch ein vorab beschriebenes Hydrauliksystem gelöst. Das erfindungsgemäße Hydrauliksystem kann aber auch in der Lenkung oder in Antiwanksystemen eingesetzt werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: einen Hydraulikschaltplan eines erfindungsgemäßen Hydrauliksystems zur Steuerung eines Automatikgetriebes;
- Figur 2: ein Blockschaltbild zur Steuerung einer zweiflutigen Pumpe mit einer Ventileinrichtung und einem zusätzlichen Stromregelventil;
- Figur 3: ein Blockschaltbild zur Steuerung einer zweiflutigen Pumpe mit einer von zwei verschiedenen Drücken abhängigen Umschaltung;
- Figur 4: ein Blockschaltbild zur Steuerung einer zweiflutigen Pumpe mit einem Volumenstromumleiter und
- Figur 5: ein Blockschaltbild zur Steuerung einer zweiflutigen Pumpe mit zwei in Reihe geschalteten Ventilen.

Heutige Automatikgetriebe für Pkw-Anwendungen steuern den Anfahrvorgang, die Übersetzungsänderung und das Betätigen der Wendesatzkupplungen für Vorwärts-/Rückwärtsfahrt sowie Kühlung und Schmierung hydraulisch. Dazu ist eine hydraulische Druckversorgungseinheit und eine hydraulische Steuerung notwendig.

Zur Druckversorgung von Automatikgetrieben werden bisher meist einflutige Pumpen verwendet. Diese Pumpen zeichnen sich dadurch aus, dass ihr Fördervolumen rein drehzahlproportional ist. Das ist insofern nachteilig, dass bei der Auslegung der Pumpengröße oftmals Extremsituationen, wie zum Beispiel eine Schnellverstellung bei niedrigen Drehzahlen, auslegungsbestimmend sind. In vielen anderen Fahrsituationen wird der dann zur Verfügung gestellte Volumenstrom nicht benötigt. Der Wirkungsgrad dieser Pumpen ist nicht optimal, da zum Beispiel bei Höchstgeschwindigkeit von der mechanisch angetriebenen Pumpe unnötig viel hydraulische Leistung erzeugt wird. Zum anderen werden die verwendeten hydraulischen Bauteile, wie zum Beispiel die Pumpe, beispielsweise bei Höchstgeschwindigkeit unnötig stark belastet.

Durch die vorliegende Erfindung wird ein Pumpenkonzept geschaffen, bei dem der benötigte Volumenstrom bedarfsabhängig erzeugt wird. Dadurch können sowohl die hydraulische Verlustleistung als auch die Pumpenbelastung reduziert werden. Bei dem erfindungsgemäßen Hydrauliksystem wirkt es sich vorteilhaft aus, dass der Systemdruck gesenkt werden kann, da bei einem hohen Systemdruck in der Regel die Leckagen deutlich zunehmen. Die Ansteuerung der einzelnen Pumpenfluten wird vorzugsweise so durchgeführt, dass der Nettovolumenstrom gleich bleibt. Es wird angestrebt, bei gleicher Drehzahl bei kaltem Öl weniger Volumenstrom zu erzeugen als bei warmem Öl, da bei niedrigeren Öltemperaturen geringere Leckagen vorhanden sind und somit der Volumenstrombedarf sinkt.

Es hat sich als vorteilhaft erwiesen, wenn ein Teil des von der Pumpe zur Verfügung gestellten Volumenstroms auch zur Kühlung des Getriebes verwendet wird. Bei kalten Außentemperaturen ist es vorteilhaft, den Volumenstrom soweit zu reduzieren, dass nur noch die gerade erforderliche Menge durch den Kühler strömt und somit die Wärmeverluste reduziert werden. Bei einem sehr heißen Getriebe ist es vorteilhaft, mehr Volumenstrom als benötigt zu erzeugen, um die Wärmeabgabe zu erhöhen.
Ebenfalls als vorteilhaft hat sich erwiesen, wenn ein Teil des von der Pumpe zur Verfügung gestellten Volumenstroms auch zur Kühlung überhitzungsgefährdeter Einzelkomponenten des Getriebes, wie z.B. Reibungskupplungen verwendet wird. Bei geringer Reibleistung ist es vorteilhaft, den Volumenstrom auszuschalten, während bei hoher Reibleistung (Anfahrten am Berg) die erforderliche Menge an kaltem Öl über die Reibungskupplung gegossen wird um diese vor Überhitzung zu schützen.

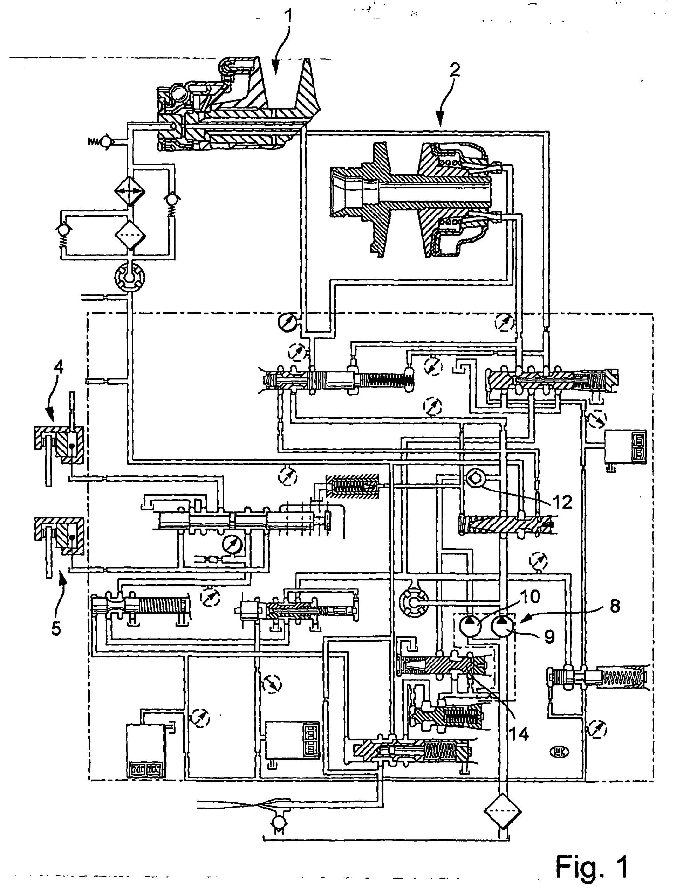

In Figur 1 ist eine hydraulische Steuerung für ein Automatikgetriebe mit einem Antriebsscheibensatz 1 und einem Abtriebsscheibensatz 2 dargestellt. Das in Figur 1 dargestellte Hydrauliksystem dient außerdem zur Steuerung einer Kupplung 4 für Rückwärtsfahrt und einer Kupplung 5 für Vorwärtsfahrt. Die Betätigung der Scheibensätze 1, 2 und der Kupplungen 4, 5 erfolgt durch eine Pumpe 8, in der eine erste Pumpenflut 9 und eine zweite Pumpenflut 10 parallel zueinander erzeugt werden. Die beiden Pumpenfluten 9 und 10 sind über ein Rückschlagventil 12 zusammengeführt. Ein zusätzliches Ventil 14 dient dazu, so zwischen den beiden Pumpenfluten 9, 10 umzuschalten, dass entweder nur die Pumpenflut 9 oder die beiden Pumpenfluten 9 und 10 zusammen in Richtung der Verbraucher 1, 2, 4, 5 gefördert werden.

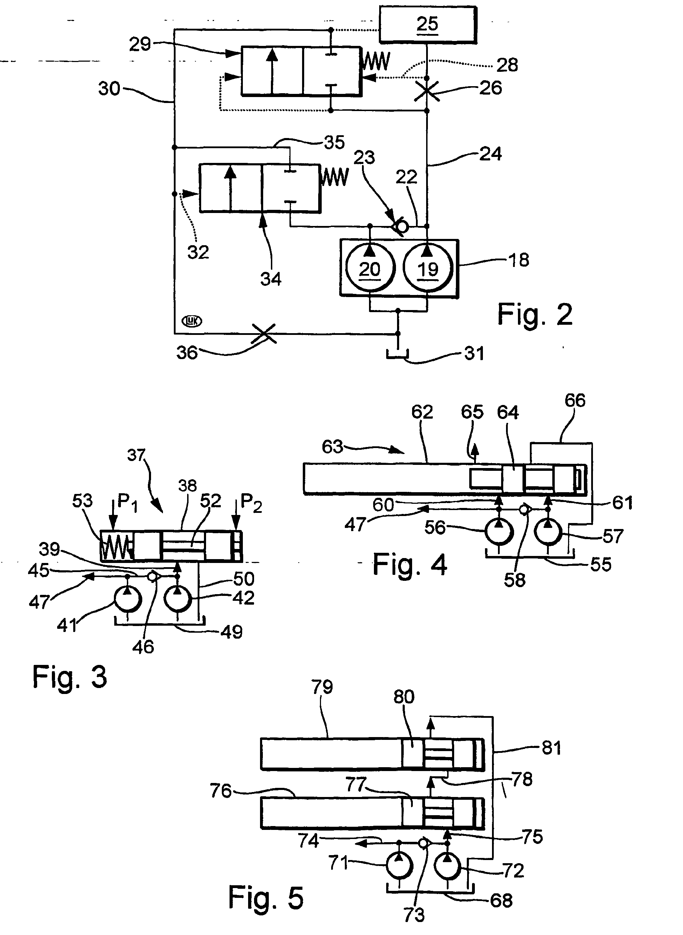

In Figur 2 ist ein erfindungsgemäßes Hydrauliksystem zum gezielten Ansteuern zweier Pumpenfluten dargestellt. Eine Pumpe 18, zum Beispiel eine Flügelzellenpumpe, ist so aufgebaut und ausgelegt, dass sie eine erste Pumpenflut 19 parallel zu einer zweiten Pumpenflut 20 fördert. Die beiden Pumpenfluten 19 und 20 stehen auf der Ausgangsseite der Pumpe 18 über eine Leitung 22 miteinander in Verbindung, in der ein Rückschlagventil 23 angeordnet ist. Das Rückschlagventil 23 ist so in der Leitung 22 angeordnet, dass entweder nur die erste Pumpenflut 19 oder aber sowohl die erste Pumpenflut 19 als auch die zweite Pumpenflut 20 über eine Leitung 24 zu einem Verbraucher 25 gefördert werden. In der Leitung 24 ist zwischen der Ausgangsseite der Pumpe 18 und dem Verbraucher 25 eine Messblende 26 angeordnet. Die Messblende 26 gehört, wie durch einen gestrichelten Pfeil 28 angedeutet ist, zu einem Stromregelventil 29, das zwischen der Eingangsseite und der Ausgangsseite des Verbrauchers 25 angeordnet ist, um den Volumenstrom zu regeln, der dem Verbraucher 25 zugeführt wird. Bei dem Stromregelventil 29 handelt es sich um ein 2/2-Proportional-Wegeventil. Wenn der zum Verbraucher 25 geförderte Volumenstrom einen einstellbaren Maximalwert überschreitet, so schaltet das Stromregelventil aus der in Figur 2 dargestellten Stellung in seine zweite Stellung um. In seiner zweiten Stellung (nicht dargestellt) gibt das Stromregelventil 29 eine Verbindung von der Ausgangsseite der Pumpe 18 über die Leitung 24 am Verbraucher vorbei zu einer Rückführleitung 30 frei, die zu einem Tank 31 führt.
Durch einen Pfeil 32 ist angedeutet, dass der Druck in der Rückführleitung 30 zur Steuerung einer zusätzlichen Ventileinrichtung 34 dient. Bei der Ventileinrichtung 34 handelt es sich um ein 2/2-Proportional-Wegeventil, das eine Verbindungsleitung 35 zwischen der Rückführleitung 30 und der Ausgangsseite der zweiten Pumpenflut 20 der Pumpe 18 unterbricht oder freigibt (nicht dargestellt): Durch einen hydraulischen Widerstand 36 wird der Druck in der Rückführleitung 30 vor der Ventileinrichtung 34 gestaut.

Bei dem in Figur 2 dargestellten Hydrauliksystem wird die Ventileinrichtung 34 dazu verwendet, gezielt entweder nur die Pumpenflut 19 oder die beiden Pumpenfluten 19 und 20 zusammen zu dem Verbraucher 25 zu fördern. Der Rückstaudruck in der Leitung 30 wird, wie durch den Pfeil 32 angedeutet ist, dazu verwendet, die Ventileinrichtung 34 gegen eine Feder zu schalten. Der über die Rückführleitung 30 zurück in den Tank 31 und/oder zur Eingangsseite der Pumpe 18 zurückströmende Hydraulikölvolumenstrom trifft auf den hydraulischen Widerstand 36, der, in Abhängigkeit vom Volumenstrom, den Rückstaudruck erzeugt. Als hydraulischer Widerstand 36 kann zum Beispiel die in Flügelzellenpumpen verwendete Injektorpumpe eingesetzt werden. Eine solche lnjektorpumpe wird in Flügelzellenpumpen benötigt; um eine ordentliche Befüllung der Pumpe bei höheren Drehzahlen sicherzustellen. In Figur 2 ist der hydraulische Widerstand 36 durch eine Blende dargestellt.

Die zweiflutige Pumpe 18 ist beispielsweise durch die Kurbelwelle einer Brennkraftmaschine eines Kraftfahrzeugs angetrieben und fördert demzufolge einen drehzahlabhängigen Hydraulikölvolumenstrom. Die beiden Pumpenfluten 19 und 20 sind über das Rückschlagventil 23 zusammengeführt und werden in der in Figur 2 dargestellten Stellung des Schaltventils 34 durch die Leitung 24 über die Messblende 26 dem Verbraucher 25 zugeführt. Bei dem Verbraucher kann es sich, wie in Figur 1 dargestellt ist, um einen Scheibensatz zur Verstellung des Übersetzungsverhältnisses oder um eine Kupplung in einem Automatikgetriebe handeln. Über die Rückführleitung 30 von dem Verbraucher 25 zurückströmendes Hydrauliköl wird über den hydraulischen Widerstand 36 wieder der Pumpe 18 zugeführt.

Wenn die Drehzahl der Pumpe 18 erhöht wird, dann wird mehr Hydrauliköl gefördert und dem Verbraucher 25 zugeführt. Dementsprechend höher ist dann auch der Rückfluss an Hydrauliköl über die Rückführleitung 30 zum Saugtrakt der Pumpe 18. Der dadurch zunehmende Rückstaudruck an dem hydraulischen Widerstand 36 führt dazu, dass die Ventileinrichtung 34 die zweite Pumpenflut 20 der Pumpe 18 mit dem rückfließenden Hydrauliköl in der Rückführleitung 30 kurzschließt. Dadurch fällt der Druck der Pumpenflut 20 auf den Rückstaudrück in der Rückführleitung 30 ab und das Rückschlagventil 23 schließt. Die zweite Pumpenflut 20 der Pumpe 18 ist dann auf Umlauf geschaltet und muss nur noch gegen den sowieso vorhandenen Rückstaudruck in der Rückführleitung 30 fördem. Dadurch wird die Leistungsaufnahme der Pumpe 18 reduziert.

Wenn die Drehzahl der Pumpe 18 und damit der zu dem Verbraucher 25 geförderte Volumenstrom zunimmt, dann begrenzt das Volumenstromregelventil 29 in Verbindung mit der Messblende 26 den Volumenstrom zu dem Verbraucher 25. Das in Figur 2 dargestellte Hydrauliksystem liefert den Vorteil, dass die Zuschaltung der zweiten Pumpenflut 20 nur im Bedarfsfall erfolgt. Wenn der Verbraucher 25 mehr Hydrauliköl benötigt und demzufolge kein oder weniger Hydrauliköl über das Stromregelventil 29 und die Rückführleitung 30 zum Tank 31 beziehungsweise zur Eingangsseite der Pumpe 18 zurückgeführt wird, dann nimmt der Volumenstrom durch den hydraulischen Widerstand 36 und damit der Rückstaudruck in der Rückführleitung 30 ab. Das führt dazu, dass die Ventileinrichtung 34 schließt und der Hydraulikölvolumenstrom der zweiten Pumpenflut 20 wieder dem Verbraucher 25 zugeführt wird, wie in Figur 2 dargestellt ist. Dadurch wird der erhöhte Hydraulikölbedarf sichergestellt. Wenn der Bedarf des Verbrauchers 25 wieder abnimmt, dann wird entsprechend mehr Hydrauliköl zurückgeführt, was zu einer erneuten Schaltung der zweiten Pumpenflut 20 auf drucklosen Umlauf führt.

In Figur 3 ist ein Ausschnitt eines Hydraulikschaltplans nur zur Information dargestellt (nicht im Schutzungfang der Ansprüche), in dem eine Ventileinrichtung zur bedarfsabhängigen Volumenstromerzeugung mit 37 bezeichnet ist. Die Ventileinrichtung 37 umfasst ein Ventilgehäuse 38, das über eine Leitung 39 mit der Ausgangsseite einer Pumpe mit zwei Pumpenfluten 41 und 42 verbunden ist. Die beiden Pumpenfluten 41 und 42 stehen über eine Leitung 45, in der ein Rückschlagventil 46 angeordnet ist, miteinander in Verbindung. Durch einen Pfeil 47 ist angedeutet, dass die Ausgangsseite der Pumpenfluten 41 und 42 mit einem (nicht dargestellten) Verbraucher in Verbindung steht. Die Eingangsseite der Pumpenfluten 41 und 42 steht mit einem Hydrauliktank 49 in Verbindung. Von dem Hydrauliktank 49 führt eine Leitung 50 zu dem Ventilgehäuse 38. In dem Ventilgehäuse 38 ist ein Stößel 52 gegen eine Feder 53 vorgespannt. Die der Feder 53 zugewandte Stirnseite des Stößels 52 ist mit einem Druck P1 beaufschlagt. Die der Feder 53 abgewandte Stirnseite des Stößels 52 ist mit einem Druck P2 beaufschlagt.

In dem in Figur 3 dargestellten Zustand der Ventileinrichtung 37 wird die Pumpenflut 42 über die Leitung 50 im Kreis gefördert und gelangt nicht zum Verbraucher. Lediglich die Pumpenflut 41 gelangt über die Leitung 47 zum Verbraucher. Durch das Rückschlagventil 46 ist sichergestellt, dass die Pumpenflut 41 nicht über die Leitung 39 in das Ventilgehäuse 38 gelangt. Wenn sich der Stößel 52 so verschiebt, dass die Leitung 39 verschlossen wird, dann steigt der Druck am Ausgang der Pumpenflut 42 solange, bis das Rückschlagventil 46 in der Leitung 45 die Verbindung zu der Pumpenflut 41 freigibt. Dann werden beide Pumpenfluten 41 und 42 zum Verbraucher gefördert. Die Zuschaltung der Pumpenflut 42 zu der Pumpenflut 41 findet statt, wenn das Produkt aus einer ersten Konstante mit dem Verstelldruck P2 größer als die Summe aus dem Produkt einer zweiten Konstante mit dem Anpressdruck P1 und der Federkraft ist. Die Drücke P1 und/oder P2 können alternativ ein in der hydraulischen Steuerung ohnehin vorhandener, eine Volumenstrom erfordernde Funktion steuernder Druck sein, oder ein von einem elektrischen Steuergerät per Schaltventil erzeugter Druck sein.

In Figur 4 ist ein Schaltbild eines Hydrauliksystems nur zur Information dargestellt, (nicht im Schutzunfang der Ansprüche), in dem aus einem Tank 55 sowohl eine erste Pumpenflut 56 als auch eine zweite Pumpenflut 57 einer Flügelzellenpumpe gespeist werden. Die beiden Pumpenfluten 56 und 57 stehen über ein Rückschlagventil 58 miteinander in Verbindung. Der Ausgang der ersten Pumpenflut 56 steht über eine Leitung 60 mit einem Ventilgehäuse 62 einer Ventileinrichtung 63 in Verbindung. Die zweite Pumpenfiut 57 steht über eine Leitung 61 mit dem Ventilgehäuse 62 in Verbindung. In dem Ventilgehäuse 62 der Ventileinrichtung 63 ist ein Stößel 64 verschiebbar aufgenommen. Der Stößel kann im nicht dargestellten Bereich links noch weitere Funktionen wahrnehmen, indem Ölkariäle je nach Stößetposition verschlossen oder geöffnet werden. Durch einen Pfeil 65, der von dem Ventilgehäuse 62 ausgeht, ist eine Verbindung zu einem (nicht dargestellten) Verbraucher angedeutet. Außerdem geht von dem Ventilgehäuse 62 eine Rückführleitung 66 aus, die in den Tank 55 mündet.

In der in Figur 4 dargestellten Stellung des Stößels 64 wird die erste Pumpenflut 56 über die Leitungen 60 und 65 zum Verbraucher gefördert. Die zweite Pumpenflut 57 wird über die Leitung 61 und die Rückführleitung 66 zurück in den Tank 55 gefördert. Wenn der Stößel 64 nach rechts verschoben wird, wird die Verbindung zwischen der Leitung 61 und der Rückführleitung 66 unterbrochen, was dazu führt, dass der Druck an der Ausgangsseite der zweiten Pumpenflut 57 solange ansteigt, bis das Rückschlagventil 58 öffnet, und die beiden Pumpenfluten 56 und 57 gemeinsam über die Leitungen 60 und 65 zum Verbraucher gefördert werden.

In Figur 5 ist ein Schaltbild eines Hydrauliksystems nur zur Information dargestellt (nicht in Schutzunfang der Ansprüche), in dem aus einem Tank 68 sowohl eine erste Pumpenflut 71 als auch eine zweite Pumpenflut 72 mit Hydrauliköl gespeist werden. Die beiden Pumpenfluten 71 und 72 stehen über ein Rückschlagventil 73 miteinander in Verbindung. Durch einen Pfeil 74 ist eine Leitung zu (nicht dargestellten) Verbrauchern angedeutet. Durch einen Pfeil 75 ist eine Verbindung zwischen der Ausgangsseite der zweiten Pumpenflüt 72 zu einem Ventilgehäuse 76 eines ersten Ventils angedeutet. In dem Ventilgehäuse 76 ist ein Stößel 77 verschiebbar aufgenommen. Das Ventilgehäuse 76 des ersten Ventils steht über eine Leitung 78 mit einem Ventilgehäuse 79 eines zweiten Ventils in Verbindung. In dem Ventilgehäuse 79 des zweiten Ventils ist ein Stößel 80 verschiebbar aufgenommen. Das Ventilgehäuse 79 des zweiten Ventils steht über eine Rückführleitung 81 mit dem Tank 68 in Verbindung.
Jedes der dargestellten Ventile kann im nicht dargestellten Bereich links noch weitere Funktionen mit den selben Stößel wahrnehmen, indem Ölkanäle verschlossen oder freigegeben werden. Z.B. können damit Kupplungen druckbeaufschlagt werden, oder es können insbesondere Volumenstrom erfordemde Verbraucher wie eine Kühlung geschaltet werden.

In der in Figur 5 dargestellten Stellung der Stößel 77 und 80 in den zugehörigen Ventilgehäusen 76 und 79 wird die zweite Pumpenflut 72 über die Leitungen 75, 78 und 81 zurück in den Tank 68, also im Kreislauf, gefördert. Die Verbindung zwischen den beiden Pumpenfluten 71 und 72 ist durch das Rückschlagventil 73 unterbrochen. Wenn einer der Stößel 77 und 80 nach rechts gegen den zugehörigen Anschlag verschoben wird, dann wird die Rückführung in den Tank 68 unterbrochen. Das führt zu einem Druckanstieg auf der Ausgangsseite der zweiten Pumpenflut 72. Der Druck auf der Ausgangsseite der zweiten Pumpenflut 72 steigt solange, bis das Rückschlagventil 73 öffnet, und beide Pumpenfluten 71 und 72 gemeinsam über die Leitung 74 zum Verbraucher gefördert werden. Die beiden Ventile mit den Ventilgehäusen 76 und 79 sind also in Reihe oder in Serie geschaltet.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Hydrauliksystem mit einer mehrflutigen, insbesondere zweiflutigen hydraulischen Druckversorgungseinheit, wie einer Pumpe, durch die einem Verbraucher ein Volumenstrom zugeführt wird, wobei eine Ventileinrichtung zum Umschalten zwischen den einzelnen Pumpenfluten und/oder zum Zusammenschalten der einzelnen Pumpenfluten vorgesehen ist und
die einzelnen Pumpenfluten über ein Rückschlagventil zusammengeführt beziehungsweise getrennt sind,
**dadurch gekennzeichnet, dass** die mindestens eine Pumpenflut, die durch das Rückschlagventil von der mindestens einen anderen Pumpenflut getrennt ist, über die Ventileinrichtung abführbar ist, die
eine durch eine Federeinrichtung vorgespannte Fläche aufweist, die mit dem Staudruck einer von dem Verbraucher zur Eingangsseite der hydraulischen Druckver sorgungseinheit führenden Rückführung beaufschlagt ist.

2. Hydrauliksystem nach Anspruch 1, **dadurch gekennzeichnet, dass** zwischen der Ventileinrichtung und der Eingangsseite der hydraulischen Druckversorgungseinheit ein hydraulischer Widerstand angeordnet ist.

3. Hydrauliksystem nach einem der vorhergehenden Ansprüche, **dadurch gekennzeichnet, dass** die Ventileinrichtung ein 2/2-Wegeventil umfasst, das in der einen Stellung eine zwischen der Ausgangsseite einer Pumpenflut und der Eingangsseite der hydraulischen Druckversorgungseinheit vorgesehene Verbindung freigibt, die in der anderen Stellung des 2/2-Wegevontils unterbrochen ist.

4. Hydrauliksystem nach einem der Ansprüche 1 bis 3, **dadurch gekennzeichnet, dass** die Ventileinrichtung drei Schaltstufen aufweist, wobei in der ersten Schaltstufe ein Kühlkreislauf nicht versorgt wird und nur eine Pumpenflut von der hydraulischen Druckversorgungseinheit zum Verbraucher gefördert wird, wobei in der zweiten Schaltstufe der Kühlkreislauf nicht versorgt wird und mindestens zwei Pumpenfluten von der hydraulischen Druckversorgungseinheit zum Verbraucher gefördert werden, und wobei in der dritten Schaltstufe der Kühlkreislauf versorgt wird und mindestens zwei Pumpenfluten von der hydraulischen Druckversorgungseinheit zum Verbraucher gefördert werden.

5. Hydrauliksystem nach Anspruch 4, **dadurch gekennzeichnet, dass** die Ventileinrichtung eine weitere Schaltstufe aufweist, in welcher ein Sicherheitsventil betätigt wird.

6. Hydrauliksystem nach einem der Ansprüche 1 oder 2 **dadurch gekennzeichnet, dass** die Ventileinrichtung, insbesondere als 2/2-Wegeventil, so ausgelegt ist, dass nur eine Pumpenflut von der hydraulischen Druckversorgungseinheit zu dem Verbraucher gefördert wird, solange ein erster Druck, insbesondere der Verstelldruck eines Automatikgetriebes, kleiner oder gleich der Summe aus einem zweiten Druck, insbesondere dem Anpressdruck eines Automatikgetriebes, und einer Federkraft ist, und dass mindestens zwei Pumpenfluten von der hydraulischen Druckversorgungseinheit zu dem Verbraucher gefördert werden, wenn der erste Druck, insbesondere der Verstelldruck eines Automatikgetriebes, größer als die Summe aus dem zweiten Druck, insbesondere dem Anpressdruck eines Automatikgetriebes, und der Federkraft ist.

7. Hydrauliksystem nach Anspruch 6, **dadurch gekennzeichnet, dass** die Ventileinrichtung einen Stößel umfasst, dessen eine Stirnseite mit dem ersten Druck und dessen andere Stirnseite mit dem zweiten Druck und der Federkraft beaufschlagt ist.

8. Hydrauliksystem nach einem der Ansprüche 1 oder 2, **dadurch gekennzeichnet, dass** die Ventileinrichtung mindestens ein Ventil umfasst, deren Umschalten bewirkt, dass mindestens eine der Pumpenfluten zum Verbraucher gefördert wird und das noch eine weitere Funktion wahrnimmt.

9. Hydrauliksystem nach Anspruch 8, **dadurch gekennzeichnet, dass** mindestens zwei Ventile in Reihe geschaltet sind.

10. Hydrauliksystem nach einem der vorhergehenden Ansprüche, **dadurch gekennzeichnet, dass** zwischen der Ausgangsseite der hydraulischen Druckversorgungseinheit und dem Verbraucher ein Volumenstromregelventil angeordnet ist.

11. Hydrauliksystem nach einem der vorhergehenden Ansprüche, **dadurch gekennzeichnet, dass** das Zu-/Wegschalten einzelner Pumpenfluten bedarfsabhängig erfolgt.

12. Hydrauliksystem nach einem der vorhergehenden Ansprüche, **dadurch gekennzeichnet, dass** das Verhältnis zwischen den einzelnen Pumpenfluten asymmetrisch ist.

13. Hydrauliksystem nach Anspruch 12, **dadurch gekennzeichnet, dass** eine erste Pumpenflut etwa ein Drittel und eine zweite Pumpenflut etwa zwei Drittel des gesamten Förderstroms der hydraulischen Druckversorgungseinheit umfasst.

14. Hydrauliksystem nach einem der vorhergehenden Ansprüche, **dadurch gekennzeichnet, dass** die hydraulische Druckversorgungseinheit eine Flügelzellenpumpe oder eine Innenzahnradpumpe umfasst.

15. Hydrauliksystem nach Anspruch 14, **dadurch gekennzeichnet, dass** zwischen der Ventileinrichtung und der Eingangsseite der hydraulischen Druckversorgungseinheit ein hydraulischer Widerstand angeordnet ist, der eine Injektorpumpe umfasst, welche in die Flügelzellenpumpe integriert ist.

16. Automatikgetriebe für Kraftfahrzeuge mit einem Hydrauliksystem nach einem der vorhergehenden Ansprüche.

## Claims

1. A hydraulic system having a multi-flow, in particular a double-flow hydraulic pressure supply unit, such as a pump by which a volume flow is supplied to a consumer, where a valve device is provided to switch between the individual pump streams and/or to join the individual pump streams together, and the individual pump streams are combined or separated through a check valve, **characterized in that** the at least one pump stream, which is separated from the at least one other pump stream by the check valve, can be carried off through the valve device, which has a surface pre-stressed by a spring device, which surface is subjected to the back pressure of a recirculation system leading from the consumer to the input side of the hydraulic pressure supply unit.

2. A hydraulic system according to Claim 1, **characterized in that** a hydraulic resistance is positioned between the valve device and the input side of the hydraulic pressure supply unit.

3. A hydraulic system according to one of the preceding claims, **characterized in that** the valve device includes a 2/2 directional valve, which in the one position releases a connection provided between the output side of one pump stream and the input side of the hydraulic pressure supply unit, which is interrupted when the 2/2 directional valve is in the other position.

4. A hydraulic system according to one of Claims 1 through 3, **characterized in that** the valve device has three operating positions; in the first operating position a cooling circuit is not supplied and only one pump stream is delivered from the hydraulic pressure supply unit to the consumer, in the second operating position the cooling circuit is not supplied and at least two pump streams are delivered from the hydraulic pressure supply unit to the consumer, and in the third operating position the cooling circuit is supplied and at least two pump streams are delivered from the hydraulic pressure supply unit to the consumer.

5. A hydraulic system according to Claim 4, **characterized in that** the valve device has another operating position in which a safety valve is operated.

6. A hydraulic system according to one of Claims 1 or 2, **characterized in that** the valve device, in particular as a 2/2 directional valve, is designed so that only one pump stream is delivered from the hydraulic pressure supply unit to the consumer as long as a first pressure, in particular the shifting pressure of an automatic transmission, is less than or equal to the sum of a second pressure, in particular the clamping pressure of the automatic transmission, and a spring force, and by the fact that at least two pump streams are delivered from the hydraulic pressure supply unit to the consumer if the first pressure, in particular the shifting pressure of an automatic transmission, is greater than the sum of the second pressure, in particular the clamping pressure of an automatic transmission, and the spring force.

7. A hydraulic system according to Claim 6, **characterized in that** the valve device includes a plunger, one face of which is acted on by the first pressure and the other face of which is acted on by the second pressure and the spring force.

8. A hydraulic system according to one of Claims 1 or 2, **characterized in that** the valve device includes at least one valve, switching of which causes at least one of the pump streams to be delivered to the consumer, and which valve also fulfills an additional function.

9. A hydraulic system according to Claim 8, **characterized in that** at least two valves are connected in series.

10. A hydraulic system according to one of the preceding claims, **characterized in that** a volume flow regulating device is positioned between the output side of the hydraulic pressure supply unit and the consumer.

11. A hydraulic system according to one of the preceding claims, **characterized in that** individual pump streams are connected or disconnected according to need.

12. A hydraulic system according to one of the preceding claims, **characterized in that** the relationship between the individual pump streams is asymmetrical.

13. A hydraulic system according to Claim 12, **characterized in that** a first pump stream comprises about one third and a second pump stream about two thirds of the total delivery flow of the hydraulic pressure supply unit.

14. A hydraulic system according to one of the preceding claims, **characterized in that** the hydraulic pressure supply unit includes a vane pump or an internal gear pump.

15. A hydraulic system according to Claim 14, **characterized in that** a hydraulic resistance that includes an injector pump which is integrated into the vane pump is positioned between the valve device and the input side of the hydraulic pressure supply unit.

16. An automatic transmission for motor vehicles, having a hydraulic system according to one of the preceding claims.

## Revendications

1. Système hydraulique comprenant une unité d'alimentation en pression hydraulique à plusieurs flux, en particulier à deux flux, comme une pompe, par laquelle un flux volumique est amené à un consommateur, un dispositif de vanne étant prévu pour la commutation entre les flux de pompe individuels et/ou pour le regroupement des flux individuels et les flux de pompe individuels étant regroupés ou séparés par une vanne antiretour, **caractérisé en ce que** le au moins un flux de pompe, qui est séparé par la vanne antiretour du au moins un autre flux de pompe, peut être évacué par le dispositif de vanne, qui présente une surface prétendue par un dispositif de ressort, lequel est alimenté avec la pression de retenue d'un recyclage allant du consommateur au côté entrée de l'unité d'alimentation en pression hydraulique.

2. Système hydraulique selon la revendication 1, **caractérisé en ce qu'**une résistance hydraulique est disposée entre le dispositif de vanne et le côté entrée de l'unité d'alimentation en pression hydraulique.

3. Système hydraulique selon l'une quelconque des revendications précédentes, **caractérisé en ce que** le dispositif de vanne comprend une vanne à 2/2 voies, qui libère dans une position une liaison prévue entre le côté sortie d'un flux de pompe et le côté entrée de l'unité d'alimentation en pression hydraulique, qui est interrompue dans l'autre position de la vanne à 2/2 voies.

4. Système hydraulique selon l'une quelconque des revendications 1 à 3, **caractérisé en ce que** le dispositif de vanne présente trois niveaux de commutation, un circuit de refroidissement n'étant pas alimenté et seulement un flux de pompe étant acheminé de l'unité d'alimentation en pression hydraulique au consommateur dans le premier niveau de commutation, le circuit de refroidissement n'étant pas alimenté et au moins deux flux de pompe étant acheminés de l'unité d'alimentation en pression hydraulique au consommateur dans le second niveau de commutation et le circuit de refroidissement étant alimenté et au moins deux flux de pompe étant acheminés de l'unité d'alimentation en pression hydraulique au consommateur dans le troisième niveau de commutation.

5. Système hydraulique selon la revendication 4, **caractérisé en ce que** le dispositif de vanne présente un autre niveau de commutation dans lequel une vanne de sécurité est actionnée.

6. Système hydraulique selon l'une quelconque des revendications 1 ou 2, **caractérisé en ce que** le dispositif de vanne, en particulier sous la forme de vanne à 2/2 voies, est conçu de telle sorte que respectivement un flux de pompe est acheminé de l'unité d'alimentation en pression hydraulique au consommateur, aussi longtemps qu'une première pression, en particulier la pression de réglage d'une boîte automatique, est inférieure ou égale à la somme résultant d'une seconde pression, en particulier la pression d'appui d'une boîte automatique, et d'une force de ressort, et **en ce qu'**au moins deux flux de pompe sont acheminés de l'unité d'alimentation en pression hydraulique au consommateur lorsque la première pression, en particulier la pression de réglage d'une boîte automatique, est supérieure à la somme de la seconde pression, en particulier la pression d'appui d'une boîte automatique, et de la force de ressort.

7. Système hydraulique selon la revendication 6, **caractérisé en ce que** le dispositif de vanne comprend un coulisseau dont le côté avant est alimenté avec la première pression et l'autre côté avant est alimenté avec la seconde pression et la force de ressort.

8. Système hydraulique selon l'une quelconque des revendications 1 ou 2, **caractérisé en ce que** le dispositif de vanne comprend au moins une vanne dont la commutation fait qu'au moins l'un des flux de pompe est acheminé au consommateur et qui assume encore une autre fonction.

9. Système hydraulique selon la revendication 8, **caractérisé en ce qu'**au moins deux vannes sont montées en série.

10. Système hydraulique selon l'une quelconque des revendications précédentes, **caractérisé en ce qu'**une vanne de réglage de flux volumique est disposée entre le côté sortie de l'unité d'alimentation en pression hydraulique et le consommateur.

11. Système hydraulique selon l'une quelconque des revendications précédentes, **caractérisé en ce que** la mise en circuit/mise hors circuit de flux de pompe individuels s'effectue en fonction des besoins.

12. Système hydraulique selon l'une quelconque des revendications précédentes, **caractérisé en ce que** le rapport entre les différents flux de pompe est asymétrique.

13. Système hydraulique selon la revendication 12, **caractérisé en ce que** le premier flux de pompe comprend environ un tiers et un second flux de pompe environ deux tiers du flux transporté global de l'unité d'alimentation en pression hydraulique.

14. Système hydraulique selon l'une quelconque des revendications précédentes, **caractérisé en ce que** l'unité d'alimentation en pression hydraulique comprend une pompe à cellules semi-rotatives ou une pompe à roue à denture intérieure.

15. Système hydraulique selon la revendication 14, **caractérisé en ce que** entre le dispositif de vanne et le côté entrée de l'unité d'alimentation en pression hydraulique est disposée une résistance hydraulique qui comprend une pompe d'injection qui est intégrée dans la pompe à cellules semi-rotative.

16. Boîte automatique pour véhicules automobiles avec un système hydraulique selon l'une quelconque des revendications précédentes.
